# EUROPEAN PATENT APPLICATION

(11) **EP 4 231 407 A1**
(43) Date of publication of application: **23.08.2023**
(21) Application number: 22871440.8
(22) Date of filing: 27.05.2022
(51) Int. Cl.: H01M 10/0567, H01M 10/0568, H01M 10/0525, H01M 10/058

(54) **ELECTROLYTE SOLUTION, SECONDARY BATTERY COMPRISING SAME, AND PREPARATION METHOD FOR SECONDARY BATTERY**

(30) Priority: 26.09.2021 CN 202111131748
(71) Applicant: Contemporary Amperex Technology Co., Limited, Ningde, Fujian 352100 (CN)
(72) Inventor: PENG, Chang, Ningde, Fujian 352100 (CN); CHEN, Peipei, Ningde, Fujian 352100 (CN); LI, Liye, Ningde, Fujian 352100 (CN); ZHANG, Limei, Ningde, Fujian 352100 (CN)
(74) Representative: Jacob, Reuben Ellis
(86) International application number: PCT/CN2022/095497
(87) International publication number: WO 2023/045379

(57) **Abstract**

The present application provides an electrolyte solution, a secondary battery, a battery pack, and electrical equipment. The electrolyte solution comprises an electrolyte salt having a molar concentration greater than or equal to 1.4 mol/L and an additive containing MSO₃F (fluorosulfonate), wherein M is a metal ion, and the metal ion is selected from one or more of Li⁺, Na⁺, K⁺, Rb⁺, and Cs+. A specific preparation method for the secondary battery comprises: preparing an electrolyte solution having an electrolyte salt concentration greater than or equal to 1.4 mol/L, and adding an additive for formation.

## Description

### CROSS-REFERENCE TO RELATED APPLICATIONS

This application claims priority to Chinese patent application No. 202111131748.1, filed on September 26, 2021 and entitled "ELECTROLYTE SOLUTION, SECONDARY BATTERY COMPRISING SAME, AND PREPARATION METHOD FOR SECONDARY BATTERY", which is incorporated herein by reference in its entirety.

### TECHNICAL FIELD

This application relates to the field of lithium battery technologies, and in particular, to an electrolyte, a secondary battery including such electrolyte, and a preparation method of such secondary battery.

### BACKGROUND

In recent years, secondary batteries are in increasingly wide use. Secondary batteries are widely used in energy storage power supply systems such as hydroelectric power plants, thermal power plants, wind power plants, and solar power plants, and many other fields including electric tools, electric bicycles, electric motorcycles, electric vehicles, military equipment, and aerospace. Along with the great development of secondary batteries, higher requirements are imposed on their energy density and cycling and storage life.

### SUMMARY

This application has been made in view of the foregoing issue and for the purpose of providing a secondary battery having good cycling and storage life and an electrolyte having production efficiency equivalent to that of a conventional electrolyte system.

To reach the above purposes, a first aspect of this application provides an electrolyte including an electrolytic salt and an additive, where the electrolytic salt has a concentration greater than or equal to 1.4 mol/L, and the additive includes MSO₃F (fluorosulfonate salt), M being selected from at least one of Li⁺, Na⁺, K⁺, Rb⁺, and Cs⁺.

In this application, the electrolyte having a high lithium-salt concentration and the fluorosulfonate salt additive are used together, facilitating a stable solvated structure and an electrolyte having good oxidation resistance such that oxidative decomposition occurs less at high voltage, thereby effectively improving cycling and storage performance of the battery.

In any embodiment, the electrolytic salt has a concentration of 1.7 mol /L to 2.9 mol/L.

In any embodiment, the electrolytic salt includes one or more of (M^{y+})_{x/y}R1(SO₂N)ₓSO₂R2, LiPF₆, LiBF₄, LiBOB, LiAsF₆, LiCF₃SO₃, LiFSI, and LiClO₄, where R1 and R2 each independently represent a fluoroalkyl group having 1 to 20 fluorine and carbon atoms, a fluoroalkoxy group having 1 to 20 carbon atoms, or an alkyl group having 1 to 20 carbon atoms, and x is an integer ranging from 1 to 3; and in some embodiments, the electrolytic salt includes one or more of LiFSI, LiPF₆, and LiCF₃SO₂NSO₂F.

In any embodiment, the fluorosulfonate salt includes one or more of LiSO₃F, NaSO₃F, KSO₃F, RbSO₃F, and CsSO₃F.

In any embodiment, the fluorosulfonate salt has a mass percentage of 0.1wt% to 5wt% in the electrolyte, optionally, 0.2wt% to 4wt%.

In any embodiment, the additive further includes an organic compound film-forming additive and an inorganic salt film-forming additive, where the organic compound film-forming additive includes one or more of carbonic ester, sulfuric ester, sulfonic ester, phosphoric ester, boric ester, and anhydride; and the inorganic salt film-forming additive includes one or more of fluorooxalatoborate salt, difluorophosphate salt, bis(oxyalyl)difluorophosphate salt, and difluorodioxalate salt.

A second aspect of this application provides a preparation method of secondary battery, where the method includes: providing an electrolyte including an electrolytic salt and an additive, where the electrolytic salt has a concentration greater than or equal to 1.4 mol/L, and the additive includes MSO₃F, M being selected from one or more of Li⁺, Na⁺, K⁺, Rb⁺, and Cs⁺; and injecting the electrolyte into a battery.

A third aspect of this application provides a secondary battery including the electrolyte in the first aspect of this application or a secondary battery prepared using the preparation method provided in the second aspect of this application.

A fourth aspect of this application provides a battery module including the secondary battery in the third aspect of this application.

A fifth aspect of this application provides a battery pack including the battery module in the fourth aspect of this application.

A sixth aspect of this application provides an electric apparatus including at least one selected from the secondary battery in the third aspect of this application, the battery module in the fourth aspect of this application, or the battery pack in the fifth aspect of this application.

The secondary battery of this application includes the electrolyte provided in the first aspect of this application and a secondary battery prepared using the preparation method provided in the second aspect of this application, and thus has excellent cycling and storage performance.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from these accompanying drawings without creative efforts.
FIG. 1 is a schematic diagram of a secondary battery according to an embodiment of this application.
FIG. 2 is a schematic exploded view of a secondary battery according to an embodiment of this application.
FIG. 3 is a schematic diagram of a battery module according to an embodiment of this application.
FIG. 4 is a schematic diagram of a battery pack according to an embodiment of this application.
FIG. 5 is an exploded view of the battery pack according to an embodiment of this application in FIG. 4.
FIG. 6 is a schematic diagram of an electric apparatus using a secondary battery as a power source according to an embodiment of this application.

Reference signs are described as follows:
1. battery pack; 2. upper box body; 3. lower box body; 4. battery module; 5. secondary battery; 51. housing; 52. electrode assembly; and 53. cover plate.

### DESCRIPTION OF EMBODIMENTS

Embodiments that specifically disclose a positive electrode plate, a negative electrode plate, a secondary battery, a battery module, a battery pack, and an electric apparatus in this application are described in detail below with reference to the accompanying drawings as appropriate. However, there may be cases where unnecessary detailed descriptions are omitted. For example, detailed descriptions of a well-known matter and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that special range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order. For example, a method including steps (a) and (b) indicates that the method may include steps (a) and (b) performed in order or may include steps (b) and (a) performed in order. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (such as lithium ions) intercalate and deintercalate back and forth between the positive electrode plate and the negative electrode plate. The separator is sandwiched between the positive electrode plate and the negative electrode plate to mainly prevent short circuit between the positive and negative electrodes and to allow active ions to pass through. The electrolyte is between the positive electrode plate and the negative electrode plate, playing a role of conducting active ions.

### [Electrolyte]

Electrolyte is a bridge for passage of active ions in the secondary battery, playing a role of conveying active ions between the positive electrode and the negative electrode in the battery, critical to fast charging performance, specific capacity, cycling efficiency, and safety performance of the battery.

The inventors have found that at present, electrolyte commonly used is an electrolyte system consisting of a conventional carbonate solution and LiPF₆ typically having a lithium salt concentration of 0.6 mol/L to 1.3 mol/L. However, at a high voltage (> 4.35 V) system, the electrolyte in such electrolyte system is prone to oxidative decomposition, impacting the cycling and storage performance of the battery.

To resolve the above technical problem, this application provides an electrolyte including an electrolytic salt and an additive, where the electrolytic salt has a concentration greater than or equal to 1.4 mol/L, and the additive includes MSO₃F (fluorosulfonate salt), M being selected from one or more of Li⁺, Na⁺, K⁺, Rb⁺, and Cs⁺.

The inventors have found through a lot of research that, when the electrolytic salt in the electrolyte has a concentration greater than or equal to 1.4 mol/L, and a fluorosulfonate salt film-forming additive is used in combination, the cycling and storage performance of the battery at high voltage can be effectively improved. As is speculated by the inventors, the concentration of the electrolytic salt being in the above range can reduce the amount of free solvent, making a stable solvated structure, thereby making the electrolyte have better oxidation resistance such that oxidative decomposition occurs less at high voltage. In addition, with the fluorosulfonate salt film-forming additive used together, because the fluorosulfonate salt can reinforce films formed on the positive electrode and the negative electrode, catalytic oxidation reactions of the electrolyte occurring on the surface of the positive electrode and side reactions on the interface of the electrolyte and the positive electrode at high voltage can be effectively reduced, effectively improving the cycling and storage performance of the battery and helping the de-solvation of lithium ions, thereby reducing impedance against the transmission of lithium ions.

In some embodiments, the electrolytic salt has a concentration of 1.7 mol/L to 2.9 mol/L. The concentration of the electrolytic salt being in a proper range can further improve stability of the solvated structure, thus further improving the cycling and storage performance of the battery.

In some embodiments, the electrolytic salt includes one or more of (M^{y+})_{x/y}R1(SO₂N)ₓSO₂R2, LiPF₆, LiBF₄, LiBOB, LiAsF₆, LiCF₃SO₃, LiFSI, and LiClO₄, where R1 and R2 each independently represent a fluoroalkyl group having 1 to 20 fluorine and carbon atoms, a fluoroalkoxy group having 1 to 20 carbon atoms, or an alkyl group having 1 to 20 carbon atoms, and x is an integer ranging from 1 to 3; and in some embodiments, the electrolytic salt includes one or more of LiFSI, LiPF₆, and LiCF₃SO₂NSO₂F.

In some embodiments, the fluorosulfonate salt additive includes one or more of LiSO₃F, NaSO₃F, KSO₃F, RbSO₃F, and CsSO₃F.

In some embodiments, the fluorosulfonate salt has a mass percentage of 0.1wt% to 5wt% in the electrolyte, optionally, 0.2wt% to 4wt%. With the concentration of the fluorosulfonate salt in the given range, a relatively low battery resistance can also be achieved while the cycling and storage performance of the battery are improved.

In some embodiments, the additive further includes an organic compound film-forming additive and an inorganic salt film-forming additive, where the organic compound film-forming additive is one or more of carbonic ester, sulfuric ester, sulfonic ester, phosphoric ester, boric ester, and anhydride; and the inorganic salt film-forming additive is one or more of MDFOB (fluorooxalatoborate salt), MPO₂F₂ (difluorophosphate salt), MDFOP (bis(oxyalyl)difluorophosphate salt), and MDFOP (difluorodioxalate salt), and specifically, the inorganic salt film-forming additive can be lithium difluorooxalate phosphate, lithium difluorophosphate, lithium difluorooxalate phosphate, difluoro lithium dioxalate, or the like. Adding other additives, for example, fluorine-containing salts, can inhibit oxidation reaction and reduction reaction of the electrolyte at high voltage, further reducing increase of resistance on the positive electrode interface and negative electrode interface.

### [Preparation method of secondary battery]

The embodiments of this application further provide a preparation method of secondary battery. The preparation method includes the following steps:
preparing an electrolyte, where the electrolyte includes an electrolytic salt and an additive, the electrolytic salt has a concentration greater than or equal to 1.4 mol/L, and the additive includes MSO₃F (fluorosulfonate salt), M being selected from one or more of Li⁺, Na⁺, K⁺, Rb⁺, and Cs⁺; and injecting the electrolyte into a battery for formation.

In some embodiments, the preparation method of secondary battery includes: preparing a first electrolyte and a second electrolyte separately, where the first electrolyte includes a first electrolytic salt and a fluorosulfonate salt additive, the first electrolytic salt having a concentration of 0.8 mol/L to 2 mol/L, and the second electrolyte includes a second electrolytic salt, the second electrolytic salt having a concentration greater than or equal to 2 mol/L; injecting the first electrolyte into the battery first, and after the first formation, injecting the second electrolyte into the battery having undergone the first formation, and subjecting the battery to charge and discharge cycling.

The inventors have found through in-depth research that, under similar concentrations of electrolytic salts in the electrolyte, two injections provide a better infiltration rate than one injection. The first electrolyte containing the fluorosulfonate salt additive and having a lower concentration of the first electrolytic salt being injected first for formation facilitates a higher charging rate which reduces the time of formation, thereby improving production efficiency. The second electrolyte having a higher concentration being added later guarantees that less second electrolyte is decomposed at high voltage. In addition, the unique solvated structure of the second electrolyte can help to improve oxidation resistance of the battery and prevent the current collectors from corrosion.

In some embodiments, the fluorosulfonate salt has a mass percentage of 0.1wt% to 5wt% in the first electrolyte, optionally, 0.2wt% to 4wt%. When the amount of the fluorosulfonate salt is undesirably low, the cycling performance of the battery at high voltage cannot be improved obviously. When the amount of the fluorosulfonate salt is undesirably high, the fluorosulfonate salt cannot be thoroughly consumed during formation of the battery for forming SEI film, causing resistance of the battery to increase, thus impacting the cycling and storage performance of the secondary battery. In addition, conductivity of the electrolyte will also deteriorate, leading to lithium precipitation during cycling.

In some embodiments, the first electrolytic salt and the second electrolytic salt are each independently selected from one or more of (M^{y+})_{x/y}R1(SO₂N)ₓSO₂R2, LiPF₆, LiBF₄, LiBOB, LiAsF₆, LiCF₃SO₃, LiFSI, LiTFSI, and LiClO₄, where R1 and R2 each independently represent a fluoroalkyl group having 1 to 20 fluorine and carbon atoms, a fluoroalkoxy group having 1 to 20 carbon atoms, or an alkyl group having 1 to 20 carbon atoms, and x is an integer ranging from 1 to 3; and in some embodiments, LiFSI, LiPF₆, LiTFSI, and LiCF₃SO₂NSO₂F are included.

In some embodiments, the second electrolyte further includes an organic film-forming additive, where the organic film-forming additive is one or more of carbonic ester, sulfuric ester, sulfonic ester, phosphoric ester, boric ester, and anhydride. Adding the organic film-forming additive helps to form a film on the surface of the positive electrode or the negative electrode, reducing oxidative decomposition of the solvent on the surface of the electrodes.

### [Positive electrode plate]

The positive electrode plate typically includes a positive electrode current collector and a positive electrode film layer provided on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well-known in the art. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: dispersing the foregoing constituents used for preparing the positive electrode plate, for example, the positive electrode active material, the conductive agent, the binder, and any other constituents in a solvent (for example, N-methylpyrrolidone) to form a positive electrode slurry; and applying the positive electrode slurry onto the positive electrode current collector, followed by processes including drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector has two opposite surfaces in its thickness direction and the negative electrode film layer is applied on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In some embodiments, the negative electrode active material may be a negative electrode active material for batteries well-known in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One type of these negative electrode active materials may be used alone, or two or more types may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other adjuvants, for example, a thickener (for example, sodium carboxymethyl cellulose (CMC-Na)).

In some embodiments, the negative electrode plate may be prepared in the following manner: dispersing the constituents used for preparing the negative electrode plate, for example, the negative electrode active material, the conductive agent, the binder, and any other constituents in a solvent (for example, deionized water) to form a negative electrode slurry; and applying the negative electrode slurry onto the negative electrode current collector, followed by processes including drying and cold pressing to obtain the negative electrode plate.

### [Separator]

In some embodiments, the secondary battery further includes a separator. The separator is not limited to any specific type in this application, and may be any commonly known porous separator with good chemical stability and mechanical stability.

In some embodiments, materials of the separator may be selected from at least one of glass fiber, non-woven fabric, polyethylene, polypropylene, and polyvinylidene fluoride. The separator may be a single-layer film or a multi-layer composite film, without any particular limitation. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft bag. Material of the soft pack may be plastic, which, for example, may be polypropylene, polybutylene terephthalate, and polybutylene succinate.

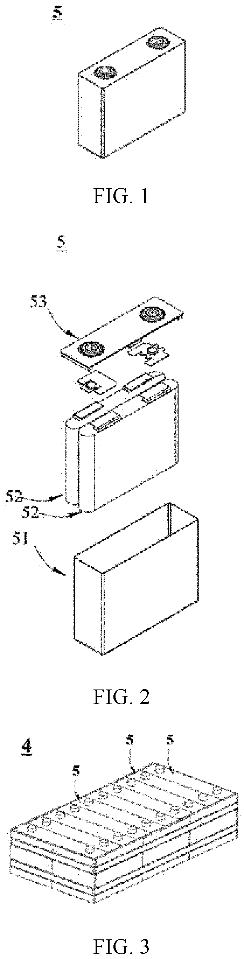

Shape of the secondary battery is not particularly limited in this application, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected to the base plate, and the base plate and the side plate enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or stacking. The electrode assembly 52 is enclosed in the accommodating cavity. The electrolyte infiltrates into the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art based on use and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the batteries may alternatively be arranged in any other manners. Furthermore, the plurality of secondary batteries 5 may be fastened through fasteners.

In some embodiments, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

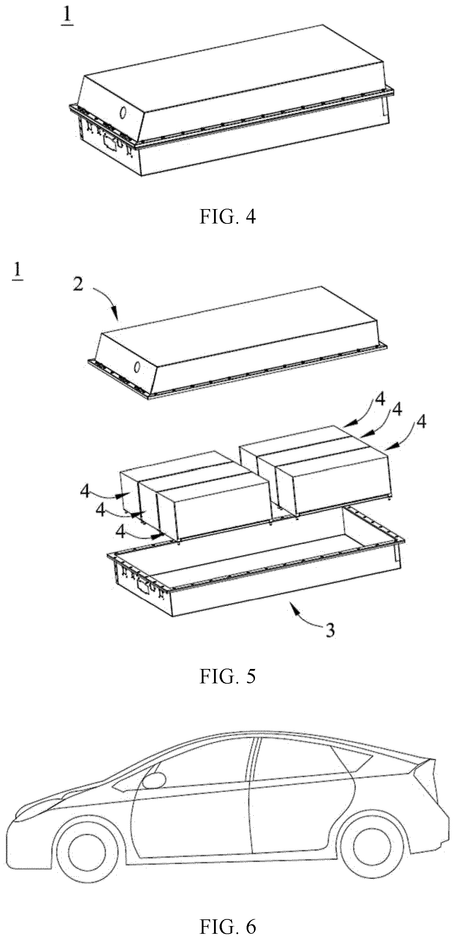

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy requirements of the electric apparatus for high power and high energy density of secondary batteries, a battery pack or a battery module may be used.

### [Examples]

This application is further described with reference to specific examples. It should be understood that the following examples are used for illustration only rather than for limiting this application. Unless otherwise stated, all reagents used in the examples are commercially available or synthesized in a conventional manner, and can be used directly without further treatment. Experimental conditions not specified in the examples are conventional conditions, or conditions recommended by material suppliers or equipment suppliers.

### Example 1

### Preparation of positive electrode plate

A positive electrode active material NCM523, a conductive agent acetylene black, and a binder polyvinylidene fluoride (PVDF) were dissolved in a solvent N-methylpyrrolidone (NMP) at a weight ratio of 96.5:1.5:2 and fully stirred into a uniform mixture to produce a positive electrode slurry, and then the positive electrode slurry was evenly applied onto a positive electrode current collector, followed by drying, cold pressing, and cutting to produce a positive electrode plate.

### Preparation of negative electrode plate

An active material artificial graphite, a conductive agent acetylene black, a binder styrene-butadiene rubber (SBR), and a thickener sodium carboxymethyl cellulose (CMC) were dissolved in a solvent deionized water at a weight ratio of 95:2:2:1, and mixed well with solvent deionized water to produce a negative electrode slurry. The negative electrode slurry was evenly applied onto a negative electrode current collector copper foil, and after drying, a negative electrode membrane was obtained. Then cold pressing and cutting were performed to produce a negative electrode plate.

### Preparation of electrolyte

EC/EMC=3/7 (mass ratio) was used as a solvent, into which 1% LiSO₃F was added and then LiFSI was added such that the electrolytic salt had a concentration of 1 mol/L, thus to produce a first electrolyte. EC/EMC=3/7 (mass ratio) was used as a solvent, into which LiFSI was added such that the electrolytic salt had a concentration of 2.4 mol/L, thus to produce a second electrolyte.

### Preparation of separator

A conventional polypropylene film was used as a separator.

### Preparation of secondary battery

The positive electrode plate, the separator, and the negative electrode plate were sequentially stacked and the stack was wound to produce an electrode assembly. The electrode assembly was placed into an outer package and dried. Then electrolyte was injected, and then processes including standing at high temperature and formation were performed to produce a secondary battery. Steps for injecting electrolyte were as follows.

Step 1: The first electrolyte was injected into the secondary battery at an amount accounting for 70% of total injection of the battery. Then, the secondary battery was left standing at high temperature and underwent formation; and

Step 2: The second electrolyte was injected into the secondary battery having undergone the formation in Step 1 and the secondary battery was subjected to charge and discharge cycling.

### Examples 2 to 14 and Comparative Examples 1 to 5

The preparation method is the same as that in Example 1, except that the concentration of electrolytic salt, the electrolyte injection order, the additive, and the number of electrolyte injections in the preparation process were changed so as to produce the corresponding secondary batteries. Details are given in Table 1.

**Table 1: Preparation-related parameters of examples and comparative examples**

| No. | First electrolyte | | | | Second electrolyte | | | Total concentration of electrolytic salt (mol/L) |
|---|---|---|---|---|---|---|---|---|
| | First electrolytic salt | Concentration (mol/L) | First additive and amount (wt/%) | Injection amount | Second electrolytic salt | Concentration (mol/L) | Injection amount | |
| Example 1 | LiFSI | 1 | 1%LiSO₃F | 70% | LiFSI | 2.4 | 30% | 1.4 |
| Example 2 | LiFSI | 1 | 1%LiSO₃F | 70% | LiFSI | 3.5 | 30% | 1.7 |
| Example 3 | LiFSI | 1.3 | 1%LiSO₃F | 70% | LiFSI | 3.5 | 30% | 1.9 |
| Example 4 | LiFSI | 1.5 | 1%LiSO₃F | 70% | LiFSI | 3.5 | 30% | 2.03 |
| Example 5 | LiFSI | 2 | 1%LiSO₃F | 70% | LiFSI | 4.3 | 30% | 2.9 |
| Example 6 | LiFSI | 2.5 | 1%LiSO₃F | 70% | LiFSI | 0.8 | 30% | 2.03 |
| Example 7 | LiFSI | 1.3 | 0.1%LiSO₃F | 70% | LiFSI | 3.5 | 30% | 1.9 |
| Example 8 | LiFSI | 1.3 | 2%LiSO₃F | 70% | LiFSI | 3.5 | 30% | 1.9 |
| Example 9 | LiFSI | 1.3 | 5%LiSO₃F | 70% | LiFSI | 3.5 | 30% | 1.9 |
| Example 10 | LiFSI | 1.3 | 6%LiSO₃F | 70% | LiFSI | 3.5 | 30% | 1.9 |
| Example 11 | LiFSI | 1.3 | 2%LiSO₃F+l%LiPO₂F₂ | 70% | LiFSI | 3.5 | 30% | 1.9 |
| Example 12 | LiFSI | 1.9 | 2%LiSO₃F+l%LiPO₂F₂ | 100% | / | / | / | 1.9 |
| Comparative Example 1 | LiFSI | 1.9 | / | 100% | / | / | / | 1.9 |
| Comparative Example 2 | LiFSI | 1.2 | 1%LiSO₃F | 100% | / | / | / | 1.2 |
| Comparative Example 3 | LiFSI | 0.9 | 1%LiSO₃F | 70% | LiFSI | 2 | 30% | 1.2 |
| Comparative Example 4 | LiFSI | 1.3 | / | 70% | LiFSI | 3.5 | 30% | 1.9 |
| Comparative Example 5 | LiFSI | 2.45 | / | 70% | LiFSI | 0.6 | 30% | 1.9 |

The total concentration of electrolytic salt is the concentration of electrolytic salt in the electrolyte of the secondary battery prepared according to the above steps.

### Tests

### (1) Test of C-rate at which no lithium precipitation occurs on the interface after full charge

At 25°C, the secondary batteries in the examples and comparative examples were tested according to the following method.
1) The secondary batteries were charged to 4.45 V at a constant current of xC, then charged to a current less than 0.05C at a constant voltage of 4.45 V, and discharged to 2.8 V at a constant current of xC, and 10 such cycles were performed.
2) The secondary batteries were charged to 4.45 V at a constant current of xC, and then charged to a current less than 0.05C at a constant voltage of 4.45 V to produce fully-charged secondary batteries.
3) The secondary batteries were disassembled and observation was made for lithium precipitation on the negative electrode.
4) The above operations were repeated until no lithium precipitation occurred, and the value x at which no lithium precipitation occurred in the battery was taken as the C-rate at which no lithium is precipitated from the first electrolyte at full charge.

### (2) Cycling performance test at 45°C

At 45°C, the secondary battery was charged to 4.45 V at a constant current of 0.1C, then charged to a current less than 0.05C at a constant voltage of 4.45 V, and discharged to 2.8 V at a constant current of 0.2C, which was one charge and discharge cycle. A discharge capacity C (Ah) was obtained. The charge and discharge cycle was repeated and the number of cycles with the desired battery capacity retained was calculated.

**Table 2: Performance tests on examples and comparative examples as contrasted**

| No. | C-rate at which no lithium precipitates from first electrolyte onto formed fully-charged interface | Cycling performance at 4.45 V and 45°C (cls) |
|---|---|---|
| Example 1 | 1.31 | 602 |
| Example 2 | 1.31 | 668 |
| Example 3 | 1.26 | 781 |
| Example 4 | 1.10 | 803 |
| Example 5 | 0.63 | 837 |
| Example 6 | 0.10 | 801 |
| Example 7 | 1.19 | 739 |
| Example 8 | 1.29 | 816 |
| Example 9 | 1.12 | 837 |
| Example 10 | 1.02 | 785 |
| Example 11 | 1.35 | 894 |
| Example 12 | 0.73 | 846 |
| Comparative Example 1 | 0.59 | 431 |
| Comparative Example 2 | 1.35 | 246 |
| Comparative Example 3 | 1.21 | 259 |
| Comparative Example 4 | 0.73 | 433 |
| Comparative Example 5 | 0.07 | 503 |

It can be seen from the test results in Table 2 that when the electrolyte satisfies that the electrolytic salt has a concentration greater than or equal to 1.4 mol/L and that the additive includes MSO₃F, M being selected from one or more of Li⁺, Na⁺, K⁺, Rb⁺, and Cs⁺, the cycling performance of the battery at high voltage is obviously improved.

Meanwhile, it can be learned through comparison of Examples 1 to 6 and Comparative Example 3 that when the first electrolytic salt has a higher concentration in the first electrolyte, the battery has a smaller C-rate at formation (meaning a longer time of formation), decreasing productivity of formation and impacting production efficiency of the battery.

It can be learned through comparison of Example 4, Example 6, and Comparative Examples 4 and 5 that the electrolyte injection order of the first electrolyte and the second electrolyte not only influences the infiltration rate of the first electrolyte into the positive electrode plate, but also has other effects that when the second electrolyte is injected first, the C-rate at which no lithium precipitation occurs on the formed fully-charged interface is obviously low, polarization is undesirably high during charge, and thus a low charging rate has to be used at formation, resulting in a longer time of formation, thereby decreasing the production efficiency of the battery.

It can be learned through comparison of Example 8 and Example 11 that after the additive LiPO₂F₂ is added, the cycling performance of the secondary battery is further improved.

It can be learned through comparison of Example 11 and Example 12 that, as compared with two injections, in the case of one injection, both infiltration of the electrolyte into the positive electrode plate and the C-rate at which no lithium precipitates from the electrolyte onto the fully-charged interface at the first formation decrease, making a longer time of formation, decreasing the production efficiency.

It can be learned through comparison of Example 3 and Example 4 that when no fluorosulfonate salt additive is added, the cycling performance of the secondary battery is obviously lower.

According to the disclosure and teaching of this specification, those skilled in the art can make further changes or modifications to the foregoing embodiments. Therefore, the present invention is not limited to the specific embodiments disclosed and described above. Some changes and modifications to the present invention shall also fall within the protection scope of the claims of the present invention. In addition, although certain terms are used in the specification, these terms are merely used for ease of description and do not constitute any limitation on the present invention.

## Claims

1. An electrolyte, comprising an electrolytic salt and an additive, wherein the electrolytic salt has a concentration greater than or equal to 1.4 mol/L, and the additive comprises MSO₃F, M being selected from one or more of Li⁺, Na⁺, K⁺, Rb⁺, and Cs⁺.

2. The electrolyte according to claim 1, wherein the electrolytic salt has a concentration of 1.7 mol/L to 2.9 mol/L.

3. The electrolyte according to claim 1 or 2, wherein the electrolytic salt comprises one or more of (M^{y+})_{x/y}R1(SO₂N)ₓSO₂R2, LiPF₆, LiBF₄, LiBOB, LiAsF₆, LiCF₃SO₃, LiFSI, LiTFSI, and LiClO₄, wherein R1 and R2 each independently represent a fluoroalkyl group having 1 to 20 fluorine and carbon atoms, a fluoroalkoxy group having 1 to 20 carbon atoms, or an alkyl group having 1 to 20 carbon atoms, and x is an integer ranging from 1 to 3; and optionally, the electrolytic salt comprises one or more of LiFSI, LiTFSI, LiPF₆, and LiCF₃SO₂NSO₂F.

4. The electrolyte according to any one of claims 1 to 3, wherein the fluorosulfonate salt comprises one or more of LiSO₃F, NaSO₃F, KSO₃F, CsSO₃F, and RbSO₃F.

5. The electrolyte according to any one of claims 1 to 4, wherein the fluorosulfonate salt has a mass percentage of 0.1wt% to 5wt% in the electrolyte, optionally, 0.2wt% to 4wt%.

6. The electrolyte according to any one of claims 1 to 5, wherein the additive further comprises an organic compound film-forming additive and an inorganic salt film-forming additive, wherein the organic compound film-forming additive comprises one or more of carbonic ester, sulfuric ester, sulfonic ester, phosphoric ester, boric ester, and anhydride; and the inorganic salt film-forming additive comprises one or more of fluorooxalatoborate salt, difluorophosphate salt, bis(oxyalyl)difluorophosphate salt, and difluorodioxalate salt.

7. A secondary battery, comprising the electrolyte according to any one of claims 1 to 6.

8. A preparation method of secondary battery, comprising the following steps:
step S1: providing an electrolyte comprising an electrolytic salt and an additive, wherein the electrolytic salt has a concentration greater than or equal to 1.4 mol/L, and the additive comprises MSO₃F, M being selected from one or more of Li⁺, Na⁺, K⁺, Rb⁺, and Cs⁺; and
step S2: injecting the electrolyte into a battery.

9. The preparation method of secondary battery according to claim 8, wherein
step S1: separately preparing a first electrolyte and a second electrolyte, wherein the first electrolyte comprises a first electrolytic salt having a concentration of 0.8 mol/L to 2 mol/L and the second electrolyte comprises a second electrolytic salt having a concentration greater than or equal to 2 mol/L; and
step S2: injecting the first electrolyte into the battery, then adding the additive MSO₃F, and then injecting the second electrolyte into the battery after the first formation.

10. The preparation method of secondary battery according to claim 9, wherein the fluorosulfonate salt has a mass percentage of 0.1wt% to 5wt% in the first electrolyte, optionally, 0.2wt% to 4wt%.

11. The preparation method of secondary battery according to claim 9 or 10, wherein the first electrolytic salt and the second electrolytic salt are each independently selected from one or more of (M^{y+})_{x/y}R1(SO₂N)ₓSO₂R2, LiPF₆, LiBF₄, LiBOB, LiAsF₆, LiCF₃SO₃, LiFSI, and LiClO₄, wherein R1 and R2 each independently represent a fluoroalkyl group having 1 to 20 fluorine and carbon atoms, a fluoroalkoxy group having 1 to 20 carbon atoms, or an alkyl group having 1 to 20 carbon atoms, and x is an integer ranging from 1 to 3; and optionally, the first electrolytic salt and the second electrolytic salt each independently comprise one or more of LiFSI, LiPF₆, and LiCF₃SO₂NSO₂F.

12. The preparation method of secondary battery according to any one of claims 9 to 11, wherein the second electrolyte further comprises an additive, and the additive is an organic compound film-forming additive, wherein the organic compound film-forming additive is one or more of carbonic ester, sulfuric ester, sulfonic ester, phosphoric ester, boric ester, and anhydride.

13. A battery module, comprising the secondary battery according to claim 7 or a secondary battery obtained using the preparation method according to any one of claims 8 to 12.

14. A battery pack, comprising the battery module according to claim 13.

15. An electric apparatus, comprising at least one selected from the secondary battery according to claim 7, the battery module according to claim 13, or the battery pack according to claim 14.
